# EUROPEAN PATENT APPLICATION

(11) **EP 1 431 932 A1**
(43) Date of publication of application: **23.06.2004**
(21) Application number: 02380263.0
(22) Date of filing: 17.12.2002
(51) Int. Cl.: G07F 7/00

(54) **Terminal for the payment of telephone and television services**

(71) Applicant: Sanirent, S.L., 08500 Vic (Barcelona) (ES)
(72) Inventor: Isern Fiter, Mariano, 08500 Vic (Barcelona) (ES)
(74) Representative: Duran Moya, Carlos

(57) **Abstract**

The terminal comprises a telephone control interface and a television control interface integrated in a single assembly with a central processing unit capable of receiving the signals generated by use of the telephone and use of the television set through the respective interfaces and having means to record the duration of use of each of said external services by means of a clock unit connected to the central processing unit and capable of supplying the duration of use to be multiplied by the corresponding pricing, with a view to the central processing unit being able to debit a single prepayment chip card incorporated in a single connector of the chip card.

## Description

The present invention relates to a terminal for controlling the payment of telephone and television services, providing important novel characteristics and inventive step.

The terminal according to the present invention is intended, in particular, for institutions such as hotels, hospitals and the like in which each individual client may use all or some of the services: telephone, television and Internet, for which services fixed fees are to be paid.

To facilitate control of payment for said services and to make the process more convenient for the user, the present invention is to disclose a single terminal which allows simultaneous control of payment for both the telephone and the television set by the use of a single prepayment card with a predetermined value which can receive charges for the use of both the telephone service and the television service. In this way the client, for example a person admitted to hospital, can very conveniently have access to said services in a very simple manner as it is sufficient to introduce a prepayment card into the single terminal according to the present invention, so that the telephone and/or the television services are automatically deducted from the card balance. The terminal also has means of information on the user about the remaining credit not used on the card for the proper control thereof.

To achieve its objects, the terminal according to the present invention substantially comprises respective telephone and television control interfaces connected to a single central processing unit accessed by a connector of the prerecorded chip card, also comprising the visual display screen and text memory unit, and an element for gauging the duration of use, i.e. a clock device, a power supply control and a keyboard which can optionally be set up for the user to access menus and to select different options, for example methods of payment, historical analysis, etc.

The central processing unit is destined to control all of the above-mentioned peripheral elements of the system, including a microprocessor and the components necessary for its connection and operation, for example signal amplifiers, oscillator, etc.

The chip card connector allows information to be read from and written to the chip card with the capacity for transferring internal card information to the central processing unit.

The television set control interface allows the operation of the television set to be controlled to adapt the electrical signals required to display text, control sound, select the channel, operating state of the television set, etc. as well as informing the central processing unit, so it applies the corresponding schedule for the television channel being watched.

The telephone control interface allows control of the number dialled by the telephone and control of the telephone line as well as the pricing of the service.

The visual display screen allows information to be immediately obtained on the operating state, time spent, remaining credit on the card and any other information necessary for correct use of the terminal, as well as displaying a history of the movements for verification, etc.

The text memory is used to store the various messages to be displayed by means of the television set and/or the visual display screen of the terminal, these messages being variable and reprogrammable, for example to adapt them to a different language, etc.

The clock is designed to record the duration of use of the controlled services, i.e. telephone and/or television service, and has a constant supply system and a high-precision oscillator.

Under these conditions the use of any of the television and/or telephone services will be subjected to time control by the clock device, calculation of the corresponding charge for the service taking place in the central processing unit, and a signal being sent to the chip card connector module to debit from it the charges for the services carried out. This information will be accessible for display by the screen.

For the purpose of better understanding there follows, by way of an exemplary but non-limiting embodiment, a block diagram showing a preferred example of the present invention.

The attached block diagram shows the various essential elements which are integrated in the payment terminal according to the present invention.

The element essential to the terminal is the central processing unit 1 which is used to control all of the peripheral elements of the system which are essentially related to the control of the operation of the television set and telephone, comprising means to record the duration of use of each of said services and also to multiply said time by the tariff established in advance to determine the successive sums to be charged to the client.

The telephone control interface 2 and the television control interface 3 are connected to the central processing unit 1, the former being designed to control the number dialled by the telephone and the telephone line as well as the corresponding pricing, and being directly connected to the central processing unit 1 by the connecting line 4. The pricing can be achieved by time or telecomputing pulses. The television set control interface 3 is connected to the central processing unit 1 and to a text memory 5 as well as a visual display screen 6, allowing previously supplied texts in the text memory 5 relating to different information messages to be viewed on the television screen and/or the visual display screen, which messages can be reprogrammed and displayed by controlling the central processing unit to show issues of interest to the user, for example credit remaining on the prepayment card, etc.

The central processing unit is also connected to a control connector module of the prepayment chip card 7 from/to which information on the chip card can be read and written, the internal information on the card being transferred to the central processing unit which will charge the amounts for the different services and obtain a remaining credit balance of the chip card capable of being sent to the visual display screen.

The processing times of the terminal are controlled by a clock device 8 connected to the central processing unit and designed to record the duration of use of the television set and/or of the telephone, which times are the base for calculating the charges to be made on the user by means of the prepayment chip card deposited in the connector 7. The time can be recorded in minutes, hours, days and weeks or any other desired period. The terminal comprises a specific connector and/or a telephone modem in order to have the possibility of updating or varying the central processing unit program, dumping data, changing parameters, etc.

The central processing unit 1 is powered by means of a supply control unit 9.

The terminal has a keyboard 10 which may optionally be set up for the user to access menus and to select different options, for example methods of payment, historical analysis, etc.

By means of the payment terminal according to the present invention it is therefore possible to easily and conveniently control operation of the television set, the telephone and the connection to the Internet accessed by each individual client, for example in a hospital, hotel, etc., allowing said services to be used very conveniently and efficiently in a single assembly, achieved by the integration of all component elements of the terminal in a single unit which is simply connected to the telephone, the television set and the external power supply.

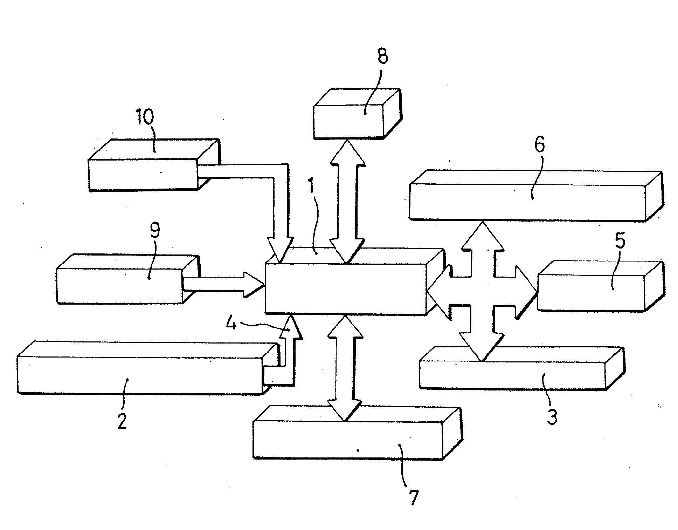

## Claims

1. Terminal for the payment of telephone and television services, **characterised in that** it comprises a telephone and Internet control interface and a television control interface integrated in a single assembly with a central processing unit capable of receiving the signals generated by use of the telephone and use of the television set through the respective interfaces and having means to record the duration of use of each of said external services by means of a clock unit connected to the central processing unit and capable of supplying the duration of use to be multiplied by the corresponding tariff, with a view to the central processing unit being able to debit a single prepayment chip card incorporated in a single connector of the chip card, a visual display screen also being incorporated in the terminal to display messages possibly pre-programmed into a text memory interconnected in the same unit and with the television control interface.

2. Terminal for the payment of telephone and television services according to claim 1, **characterised in that** each of the telephone and television control interfaces has its own pricing system for the corresponding services, the pricing data of which varies according to the services provided and is communicated to the central processing unit of the terminal.

3. Terminal for the payment of telephone and television services according to claim 1, **characterised in that** the television control interface, the text memory and the visual display screen are connected to one another and to the central processing unit.

4. Terminal for the payment of telephone and television services according to claim 1, **characterised in that** the terminal is a single physical unit with connecting means to the external power supply by means of supply and control to the telephone and the television set by means of the corresponding independent control interfaces.

5. Terminal for the payment of telephone and television services according to claim 1, **characterised in that** it has a keyboard which can optionally be set up for the user to access menus and to select different options, for example methods of payment, historical analysis, etc.
